# EUROPÄISCHE PATENTANMELDUNG

(11) **EP 4 079 460 A1**
(43) Veröffentlichungstag der Anmeldung: **26.10.2022**
(21) Anmeldenummer: 21169808.9
(22) Anmeldetag: 22.04.2021
(51) Int. Cl.: B25J 9/00, B25J 9/10, B25J 19/00

(54) **SYSTEM, KIT UND ELEKTRONISCHES MODUL ZUM AUSGLEICH EINER GEWICHTSKRAFT EINES GEGENSTANDS**

(71) Anmelder: Hilti Aktiengesellschaft, 9494 Schaan (LI)
(72) Erfinder: Käsmann, Simon, 81241 München (DE); Veik, Guenther, 6841 Maeder (AT); Schaer, Roland, 9472 Grabs (CH); Lanzinger, Michael, 84181 Neufraunhofen (DE); Draganis, Antonios, 86874 Tussenhausen (DE); Metzler, Christian, 6822 Satteins (AT); Wierer, Michael, 6832 Röthis (AT); Stevic, Dragan, 6800 Feldkirch-Tosters (AT)
(74) Vertreter: Hilti Aktiengesellschaft Corporate Intellectual Property

(57) **Zusammenfassung**

Die vorliegende Erfindung betrifft ein System zum Ausgleich einer Gewichtskraft eines Gegenstands. Dabei wird der Gegenstand an einem Zugseil befestigt, wobei das Zugseil in oder an einem Kragarm in Richtung einer Rückenstruktur des Systems geführt wird, wobei ein zweites Ende des Kragarms von einer Rückenstruktur aufgenommen und das System mittels der Rückenstruktur von einem Nutzer des Systems getragen werden kann. Das System ist durch ein elektronisches Modul gekennzeichnet, das eine Vorrichtung zum Aufwickeln des Zugseils und einen Motor zum Antrieb der Vorrichtung zum Aufwickeln des Zugseils, wobei das System dazu eingerichtet ist, eine Gegenkraft für die Gewichtskraft des Gegenstands zu ermitteln und auf den Gegenstand zu übertragen. Es ist im Sinne der Erfindung insbesondere bevorzugt, dass eine Steuereinrichtung des Systems dazu eingerichtet ist, eine Gegenkraft in Bezug auf die Gewichtskraft des Gegenstands einzustellen. Vorzugsweise kann das System dazu eingerichtet sein, ein Kräftegleichgewicht zwischen der Gewichtskraft des Gegenstands auf der einen Seite und der Gegenkraft auf der anderen Seite herzustellen. In weiteren Aspekten betrifft die Erfindung ein elektronisches Modul zum Ausgleich einer Gewichtskraft eines Gegenstands, sowie ein Kit, das ein solches elektronisches Modul, ein Zugseil und mindestens eine Umlenkrolle umfasst. Mit der Erfindung kann die Gewichtskraft eines Gegenstands, welcher an einem Zugseil eines vorgeschlagenen Ausgleichssystems befestigt werden kann, besonders gut und rückenschonend kompensiert werden.

## Beschreibung

Die vorliegende Erfindung betrifft ein System zum Ausgleich einer Gewichtskraft eines Gegenstands. Dabei wird der Gegenstand an einem Zugseil befestigt, wobei das Zugseil in oder an einem Kragarm in Richtung einer Rückenstruktur des Systems geführt wird, wobei ein zweites Ende des Kragarms von einer Rückenstruktur aufgenommen und das System mittels der Rückenstruktur von einem Nutzer des Systems getragen werden kann. Das System ist durch ein elektronisches Modul gekennzeichnet, das eine Vorrichtung zum Aufwickeln des Zugseils und einen Motor zum Antrieb der Vorrichtung zum Aufwickeln des Zugseils umfasst, wobei das System dazu eingerichtet ist, eine Gegenkraft für die Gewichtskraft des Gegenstands zu ermitteln und auf den Gegenstand zu übertragen. Es ist im Sinne der Erfindung insbesondere bevorzugt, dass eine Steuereinrichtung des Systems dazu eingerichtet ist, eine Gegenkraft in Bezug auf die Gewichtskraft des Gegenstands einzustellen. Vorzugsweise kann das System bzw. seine Steuereinrichtung ein Kräftegleichgewicht zwischen der Gewichtskraft des Gegenstands auf der einen Seite und der Gegenkraft auf der anderen Seite herstellen. In weiteren Aspekten betrifft die Erfindung ein elektronisches Modul zum Ausgleich einer Gewichtskraft eines Gegenstands, sowie ein Kit, das ein solches elektronisches Modul, ein Zugseil und mindestens eine Umlenkrolle umfasst. Mit der Erfindung kann eine Gewichtskraft eines Gegenstands besonders gut und rückenschonend kompensiert ausgeglichen werden.

### Hintergrund der Erfindung:

Die Benutzung von Werkzeuggeräten, wie Meißelgeräte, Bohrhämmer, Kernbohrgeräte oder Ähnliches, ist oft anstrengend und ermüdend, vor allem, wenn mit diesen Geräten über einen längeren Zeitraum gearbeitet wird. Werkzeuggeräte sind häufig schwer und die nach unten Richtung Erdboden wirkende Gewichtskraft eines solches Geräts führt dazu, dass Arbeiten mit solchen Geräten lediglich für einen begrenzten Zeitraum ausgeführt werden können, bevor eine Pause eingelegt werden muss. Dadurch kann allerdings ein Arbeitsfortschritt auf einer Baustelle verzögert werden, was aus verschiedenen Gründen unerwünscht ist.

Ferner kann das Arbeiten mit schweren Werkzeuggeräten über Jahre hinweg zu körperlichen Einschränkungen führen. Es besteht daher ein Bedürfnis, Mittel bereitzustellen, die die Arbeit mit schweren Werkzeuggeräten erleichtern und die Nutzer solcher Werkzeuggeräte wirksam vor gesundheitlichen Beeinträchtigungen schützen.

Nutzer von Werkzeuggeräten bringen häufig unterschiedliche körperliche Voraussetzungen für die Arbeit mit einem Werkzeuggerät mit. Dies kann beispielsweise die Körpergröße oder die für die Arbeit zur Verfügung stehende Körperkraft sein. Insofern wäre es wünschenswert, wenn die bereitzustellenden Mittel möglichst flexibel gestaltet sind und individuell an unterschiedliche körperliche Voraussetzungen angepasst werden können.

Im Stand der Technik sind beispielsweise passive Assistenzsysteme bekannt. Bei diesen passiven Assistenzsystemen kann ein Gegenstand an einem Bestandteil des Assistenzsystems befestigt werden, wobei der Gegenstand dann von dem Assistenzsystem gehalten wird. Gerade bei der Arbeit mit Werkzeuggeräten, die an einem Assistenzsystem befestigt werden sollen und mit denen mitunter sehr dynamisch gearbeitet wird, kann eine solche passive Aufhängung in manchen Anwendungsfällen keine ausreichende Unterstützung für den Nutzer bereitstellen.

Die Aufgabe, die der vorliegenden Erfindung zugrunde liegt, besteht somit darin, die vorstehend beschriebenen Mängel und Nachteile des Standes der Technik zu überwinden und ein System zum Ausgleich einer Gewichtskraft eines Gegenstands bereitzustellen, das einfach zu handhaben ist und flexibel an unterschiedliche Benutzer angepasst werden kann. Darüber hinaus soll das bereitzustellende Systemdie Gewichtskraft eines Gegenstands in unterschiedlichen Anwendungsfällen und -situationen wirksam und zuverlässig ausgleichen. Dabei wäre es wünschenswert, wenn dies ohne einen speziellen Einstellvorgang durch den Nutzer des Systems ermöglicht werden könnte. Die Fachwelt würde es ferner begrüßen, wenn das bereitzustellende System nicht nur eine statische, sondern auch eine dynamische Unterstützung des Systemnutzers ermöglichen könnte. Eine weitere Aufgabe, die der Erfindung zugrunde liegt, ist die Bereitstellung eines elektronischen Moduls als Antriebs- und Steuereinheit eines solchen Systems, sowie die Bereitstellung eines Kits, mit dem das elektronische Modul beispielsweise als stand alone-Vorrichtung verwendet werden kann.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System zum Ausgleich einer Gewichtskraft eines Gegenstands vorgesehen, wobei der Gegenstand an einem Zugseil befestigbar ist, wobei das Zugseil in oder an einem Kragarm in Richtung einer Rückenstruktur des Systems führbar ist, wobei der Kragarm von der Rückenstruktur aufnehmbar ist. Das Ausgleichssystem ist dadurch gekennzeichnet, dass das System ein elektronisches Modul umfasst, das eine Vorrichtung zum Aufwickeln des Zugseils und einen Motor zum Antrieb der Vorrichtung zum Aufwickeln des Zugseils umfasst, wobei das System dazu eingerichtet ist, eine Gegenkraft für die Gewichtskraft des Gegenstands zu ermitteln und auf den Gegenstand zu übertragen. Es ist im Sinne der Erfindung insbesondere bevorzugt, dass das System eine Steuereinrichtung umfasst, wobei das System beispielsweise durch die Steuereinrichtung dazu eingerichtet ist, eine Gegenkraft in Bezug auf die Gewichtskraft des Gegenstands einzustellen. Vorzugsweise kann die Steuereinrichtung dazu eingerichtet sein, ein Kräftegleichgewicht zwischen der Gewichtskraft des Gegenstands auf der einen Seite und der Gegenkraft auf der anderen Seite herzustellen. Darüber hinaus kann das System bzw. das elektronische Modul eine Energiequelle zur Versorgung des Systems mit elektrischer Energie aufweisen. Das System stellt vorzugsweise ein batteriebetriebenes, körpergetragenen Ausgleichs- bzw. Balancing-System dar, bei dem die Gewichtskraft eines Gegenstands durch Erzeugen einer Gegenkraft kompensiert wird, wobei die Gegenkraft durch ein Zugseil übertragen wird. Es stellt einen wesentlichen Vorteil des vorgeschlagenen Systems dar, dass es auch dem Rücken eines Nutzers getragen werden kann. Mithin stellt das System ein tragbar ausgebildetes System dar, das sich durch seine Tragbarkeit von stationären Manipulatoren unterscheidet, wie sie aus dem Stand der Technik bekannt sind.

Vorzugsweise kann das System dazu eingerichtet sein, einen Ausgleichsvorgang in Bezug auf die Gewichtskraft des Gegenstands durchzuführen. Dieser Ausgleichsvorgang kann beispielsweise durch die Steuereinrichtung des Systems vorgenommen werden. Der Ausgleichsvorgang stellt vorzugsweise einen Steuerungs- und Regelungsprozess in Bezug auf die Position eines an dem Zugseil des Systems befestigten Gegenstand dar. Der Begriff Ausgleichsvorgang betrifft insbesondere den Ausgleich einer Gewichtskraft eines Gegenstands in einem System, wobei der Gegenstand an einem Zugseil des Systems befestigt werden kann. Dabei kann es sich um einen einmaligen Vorgang handeln, der beispielsweise dann durchgeführt, wenn mit der Arbeit mit dem Gegenstand begonnen wird oder wenn ein neuer Gegenstand an dem Zugseil des Systems befestigt wird. Der Ausgleichsvorgang kann auch im Wesentlichen kontinuierlich durchgeführt werden, um einen im Wesentlichen kontinuierlich Gewichtsausgleich des Gegenstands während der Arbeit mit ihm zu ermöglichen.

Bei dem Gegenstand kann es sich insbesondere um ein Werkzeuggerät handeln, mit dem eine Arbeit verrichtet werden soll. Beispielsweise kann es sich um ein Meißelgerät, einen Bohrhammer, ein Befestigungsgerät oder ein ähnlich großes und/oder schweres Gerät handeln, mit dem beispielsweise eine Mauer bearbeitet oder ein Befestigungsgegenstand in eine Mauer oder einen Untergrund hineingetrieben werden soll. Der Fachmann kennt solche Werkzeuggeräte.

Der Gegenstand bzw. das Werkzeuggerät können mit geeigneten Befestigungs- oder Aufnahmevorrichtungen an einem Zugseil des Systems befestigt werden. Es ist im Sinne der Erfindung bevorzugt, dass das Zugseil den Gegenstand mit einer Vorrichtung zum Aufwickeln des Zugseils verbindet, wobei die Vorrichtung zum Aufwickeln des Zugseils vorzugsweise im Bereich der Rückenstruktur des Systems vorgesehen ist. Die Aufwickelvorrichtung ist vorzugsweise dazu eingerichtet, eine effektive Länge des Zugseils zu verlängern oder zu verkürzen. Dies geschieht beispielsweise im Rahmen des Ausgleichsvorgangs, bei dem das Gewicht bzw. die Gewichtskraft des Gegenstands festgestellt und zur Einstellung und Regelung der effektiven Länge des Zugseils verwendet wird. Es ist im Sinne der Erfindung aber insbesondere bevorzugt, dass im Wesentlichen kontinuierlich auf eine etwaige Änderung der Gewichtskraft des Gegenstands reagiert wird, in dem der Motor mehr oder weniger Drehmoment erzeugt und auf das Zugseil aufbringt. Die Vorrichtung zum Aufwickeln des Zugseils kann beispielsweise Zugseil freigeben oder seine Länge verkürzen, um die effektive Länge des Zugseils einzustellen. Es ist im Sinne der Erfindung ganz besonders bevorzugt, dass das Drehmoment des Motors bevorzugt kontinuierlich, d.h. im Wesentlichen während der gesamten Nutzung des Systems, an unterschiedliche Gewichtskräfte angepasst wird, um etwaige Gewichtskraftsänderungen auszugleichen. Vorteilhafterweise können dadurch Bewegungen des Gegenstands, die bei der Arbeit mit dem Gegenstand auftreten können, im Wesentlichen kontinuierlich kompensiert und der Nutzer so dauerhaft unterstützt werden. Dadurch wird der Nutzer des vorgeschlagenen Systems bei der Arbeit mit dem Gegenstand erheblich entlastet, weil er bei Nutzung des Systems lediglich die für die Durchführung der Arbeit erforderliche Kraft aufbringen muss, nicht mehr aber die Kraft zum Halten des Werkzeuggeräts. Mit anderen Worten wird der Ausgleich der Gewichtskraft des Gegenstands vom Nutzer auf das System übertragen, so dass insbesondere die Arm- und Schultermuskulatur der Systemnutzer davon befreit wird. Bei der Kraft, die für die Durchführung der Arbeit aufgebracht werden muss, kann es sich beispielsweise um eine Presskraft handeln, um einen Vortrieb des Werkzeuggeräts oder seines Werkzeugs in eine Mauer oder einen zu bearbeitenden Untergrund zu bewirken. Es ist im Sinne der Erfindung bevorzugt, dass die Aufwickelvorrichtung mindestens eine Rolle aufweist, die vorzugsweise im Bereich eines Ausgangs einer Antriebseinrichtung des Systems angeordnet vorliegt. Das Zugseil wird in oder an einem Kragarm des Systems in Richtung einer Rückenstruktur geführt. Es ist im Sinne der Erfindung bevorzugt, dass das Zugseil von dem Gegenstand in Richtung eines ersten Endes des Kragarms verläuft, wobei das erste Ende des Kragarms vorzugsweise auch als vorderes Ende des Kragarms bezeichnet werden kann. Es ist im Sinne der Erfindung bevorzugt, dass das Zugseil über Umlenkrollen innerhalb des Kragarms geführt wird. Es können im Kontext der Erfindung aber auch andere Führungsarten bevorzugt sein, die beispielsweise Bowdenkabel und/der Gleitlager umfassen.

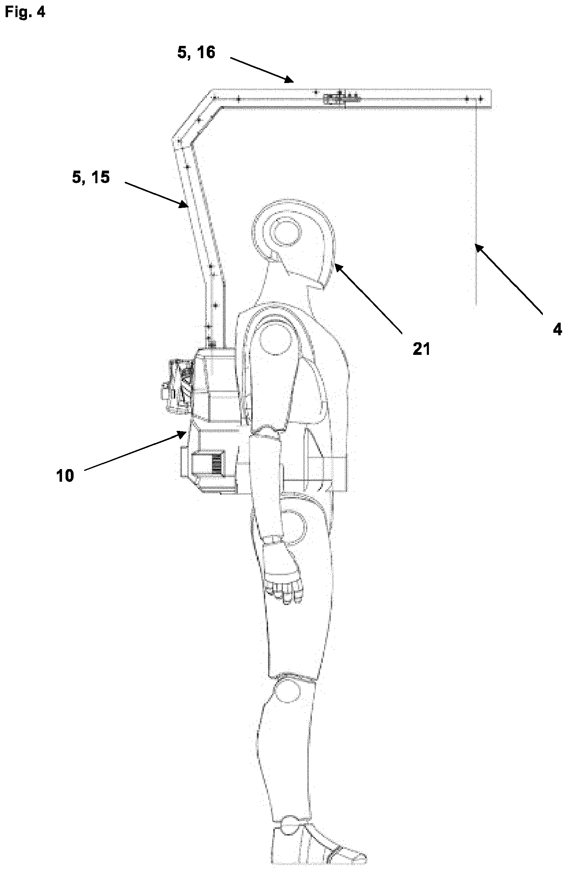

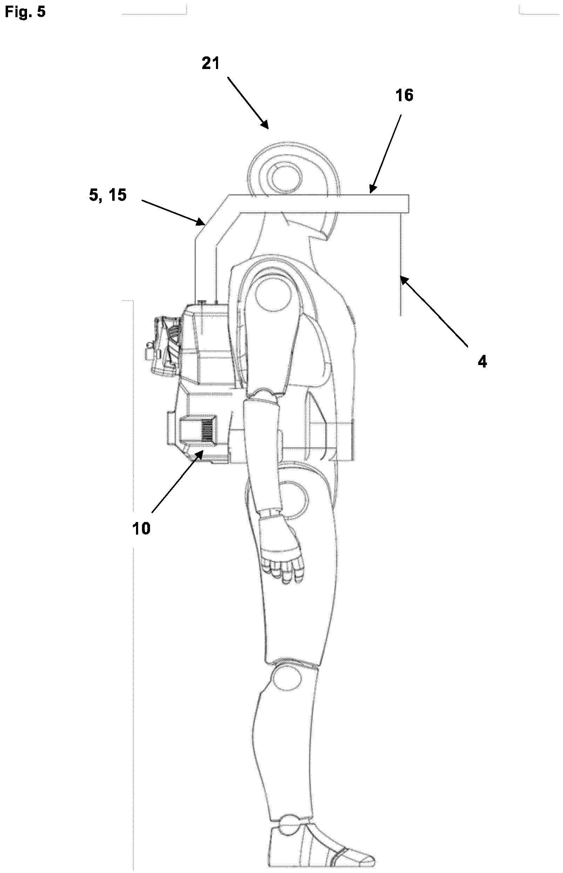

In einer bevorzugten Ausgestaltung der Erfindung ist der Kragarm im Wesentlichen L-förmig ausgebildet. Vorzugsweise umfasst der Kragarm einen Rückenabschnitt und einen Kopfabschnitt, wobei der Rückenabschnitt und der Kopfabschnitt im Wesentlichen senkrecht zueinander angeordnet sind. Es ist im Sinne der Erfindung bevorzugt, dass der Rückenabschnitt des Kragarms im Wesentlichen parallel zu einer Wirbelsäule des Systemnutzers verläuft, während der Kopfabschnitt des Kragarms oberhalb oder neben einem Kopf des Nutzers verläuft, im Wesentlichen senkrecht zu dem Rückenabschnitt und/oder der Wirbelsäule des Nutzers. Es ist im Sinne der Erfindung bevorzugt, dass der Kragarm bzw. sein Kopfabschnitt über den Kopf des Nutzers oder neben dem Kopf des Nutzers geführt werden kann. Dadurch kann ein besonders flexibles und vielfältig einsetzbares System bereitgestellt werden. Die Führung des Kragarms oberhalb bzw. neben dem Kopf des Systemnutzers wird in den Fig. 4 und 5 dargestellt. Der Übergangsbereich zwischen Rücken- und Kopfabschnitt des Kragarms kann L-förmig ausgebildet sein, einen Übergangsabschnitt umfassen oder als Gelenk ausgebildet sein. Ein als Übergangsabschnitt ausgebildeter Übergangsbereich zwischen Rücken- und Kopfabschnitt des Kragarms führt zu einer besonders stabilen Struktur des vorgeschlagenen Systems, während ein Gelenk, das im Übergangsbereich zwischen Rücken- und Kopfabschnitt des Kragarms vorgesehen sein kann, eine Klappbarkeit des Systems ermöglicht, wodurch eine Packgröße des zusammengelegten Systems erheblich reduziert werden kann.

Es kann im Sinne der Erfindung auch bevorzugt sein, dass der Rückenabschnitt und/oder der Kopfabschnitt des Kragarms Gelenke umfassen, die ebenfalls eine Klappbarkeit des Systems und eine gute Transportierbarkeit des Systems im zusammengelegten Zustand erlauben. Dabei können die Gelenke den Rückenabschnitt in einen unteren und einen oberen Bereich unterteilen bzw. den Kopfabschnitt in einen vorderen und einen hinteren Bereich. Es ist im Sinne der Erfindung bevorzugt, dass der Kragarm ein erstes Ende und ein zweites Ende aufweist. Das erste Ende des Kragarms, das im Sinne der Erfindung auch als vorderes Ende bezeichnet werden kann, bildet bevorzugt den vorderen Abschluss des Kopfabschnitts. Das zweite Ende des Kragarms, das im Sinne der Erfindung auch als unteres Ende bezeichnet werden kann, bildet bevorzugt den unteren Abschluss des Rückenabschnitts.

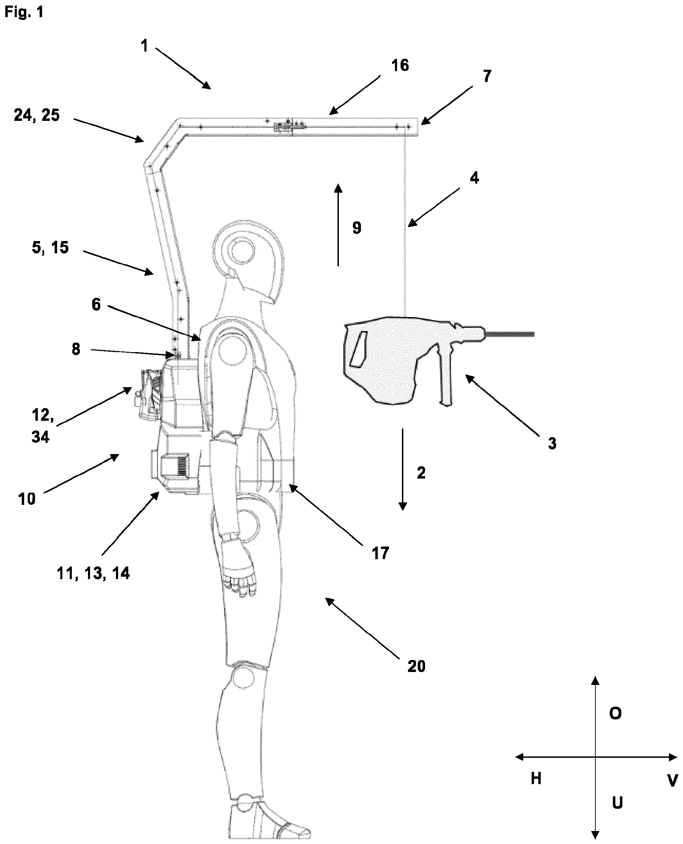

Die Begriffe "oben", "unten", "vorne" und "hinten" stellen für den Fachmann im Kontext der vorliegenden Erfindung keine unklaren Begriffe dar, da die Begriffe und die damit verbundenen Raumrichtungen "nach oben", "nach unten", "nach vorne" und "nach hinten" beispielsweise in Figur 1 erläutert werden. Beispielsweise wirkt die Gewichtskraft des Gegenstands in der Regel in eine Raumrichtung "nach unten", d.h. in Richtung des Erdbodens, auf dem der Nutzer des Systems steht. Die Raumrichtung "nach oben" entspricht der Richtung, in die der Gegenstand bewegt wird, wenn die effektive Länge des Zugseils von der Vorrichtung zum Aufwickeln des Zugseils verkürzt wird. Der Gegenstand befindet bei einer üblichen Verwendung des vorgeschlagenen Systems vor dem Nutzer, beispielsweise auf Kopf-, Brust- oder Bauchhöhe. Der Kopfabschnitt des Kragarms stellt in der Regel den höchsten Punkt des Systems da, so dass es in der Sprechweise der Erfindung den oberen Abschluss des Systems bildet. Der Rückenabschnitt des Kragarms bildet den hinteren Bereich des Systems. Im hinteren, unteren Bereich des Systems ist die Rückenstruktur mit dem elektronischen Modul, dem Motor zum Antrieb der Aufwickelvorrichtung und der Steuereinrichtung vorgesehen. Den unteren Abschluss des Systems kann beispielsweise ein Hüftgurt bilden, mit dem das System an dem Nutzer befestigt werden kann. Dieser Hüftgurt bildet im Sinne der Erfindung einen ersten Kontaktbereich, an dem ein physischer Kontakt zwischen den Systemnutzer und dem System besteht. Ein zweiter Kontaktbereich kann von einem Rückenpolster gebildet wird.

Vorzugsweise kann der Kragarm des Systems von der Rückenstruktur aufgenommen werden. Es ist im Sinne der Erfindung insbesondere bevorzugt, dass das zweite Ende des Kragarms von der Rückenstruktur aufgenommen werden kann. Das bedeutet im Sinne der Erfindung bevorzugt, dass eine Verbindung besteht zwischen dem unteren Ende des Rückenabschnitts des Kragarms und der Rückenstruktur. Beispielsweise kann das untere Ende des Rückenabschnitts des Kragarms bzw. das zweite Ende des Kragarms von einem Hohlraum in der Rückenstruktur des Systems aufgenommen werden. Darüber hinaus können Befestigungsmittel vorgesehen sein, mit denen der Kragarm bzw. sein Rückenabschnitt an oder in der Rückenstruktur befestigt werden können. Beispielsweise kann der Kragarm mit der Rückenstruktur verschraubt werden. Es sind selbstverständlich auch andere Fügetechniken zur Befestigung des Kragarms an der Rückenstruktur denkbar. Beispielsweise kann das System eine bevorzugt einteilig ausgebildete Konstruktion umfassen, die einen Übergang zwischen Kragarm und Rückenstruktur bildet. Insbesondere kann der Kragarm im Bereich dieser Konstruktion in die Rückenstruktur übergehen. Es ist im Sinne der Erfindung bevorzugt, dass sich der Kragarm von der Rückenstruktur über oder neben dem Kopf des Nutzers erstreckt, um einen Gegenstand vor dem Körper des Nutzers aufzunehmen und zu halten. Dadurch wird der Systemnutzer erheblich entlastet und kann die mit dem Gegenstand zu verrichtende Arbeit deutlich länger und mit einem reduzierten Risiko für gesundheitliche Beeinträchtigungen ausführen. Es ist im Sinne der Erfindung insbesondere bevorzugt, dass das vorgeschlagene System mittels der Rückenstruktur von einem Nutzer des Systems getragen werden kann.

Das System umfasst ein elektronisches Modul, wobei das elektronische Modul insbesondere im Bereich der Rückenstruktur des Systems angeordnet vorliegen kann. Das elektronische Modul kann Bestandteil des vorgeschlagenen Systems sein oder als stand alone-Vorrichtung ausgebildet sein. Die stand alone-Ausgestaltung des elektronischen Moduls stellt einen weiteren Aspekt der Erfindung dar, der weiter unten erläutert wird.

Das elektronische Modul umfasst eine Energiequelle zur Versorgung des Systems mit elektrischer Energie. Bei der Energiequelle kann es sich um eine Batterie oder einen Akkumulator («Akku») handeln, wobei der Akku insbesondere wieder aufladbar ist. Wenn es sich bei dem Gegenstand, dessen Gewicht mit dem vorgeschlagenen System ausgeglichen wird, um ein batterie- oder akkubetriebenes Werkzeuggerät handelt, ist es im Sinne der Erfindung bevorzugt, dass die Energiequelle ähnlich oder gleich zu der Energiequelle des Werkzeuggeräts ist. Mit anderen Worten ist es im Sinne der Erfindung bevorzugt, wenn für die Energieversorgung des vorgeschlagenen Systems und des Werkzeuggeräts im Wesentlichen gleiche Batterien und Ackus verwendet werden können.

Das elektronische Modul umfasst darüber hinaus eine Vorrichtung zum Aufwickeln des Zugseils, sowie einen Motor zu deren Antrieb. Es ist im Sinne der Erfindung bevorzugt, dass die Vorrichtung zum Aufwickeln des Zugseils in einem Bereich der Rückenstruktur angeordnet ist und das Zugseil unter Verwendung des Motors aufwickelbar ist. Der Motor des vorgeschlagenen Systems ist dazu eingerichtet, ein Drehmoment zu erzeugen, mit dem die effektive Länge des Zugseils verlängert oder verkürzt werden kann. Dies geschieht vorzugsweise in Abhängigkeit von einer Bewegung beim Führen des Gegenstands. Vorzugsweise kann das das Drehmoment des Motors dazu verwendet werden, das Zugseil zu halten, aufzuwickeln und/oder freizugeben, je nachdem wie der Nutzer die Position des Gegenstands verändert. Der Ausgleichsvorgang findet insbesondere dann statt, wenn ein neuer Gegenstand an dem Zugseil des Systems befestigt wird. Dies kann beispielsweise der Fall sein, wenn ein Werkzeuggerät ausgetauscht wird, weil eine andere Arbeit erledigt werden soll. Im Rahmen des Ausgleichsvorgangs erfolgt eine Regelung auf das statische Gewicht bzw. die Gewichtskraft des Gegenstands, wobei die Regelgröße insbesondere das Drehmoment des Motors. Es kann im Sinne der Erfindung allerdings auch bevorzugt sein, dass der Ausgleichsvorgang einen im Wesentlichen kontinuierlich ablaufenden Steuer- und Regelungsprozess darstellt, bei dem insbesondere die Motordrehzahl auf die Drehzahl "null", d.h. einen Stillstand, oder eine sehr kleine Motordrehzahl geregelt wird. Dabei kann die Geschwindigkeit des angehängten Gegenstandes beispielsweise kleiner als 10 mm/s sein, mehr bevorzugt kleiner als 5 mm/s und am meisten bevorzugt bei ca. 3,7 mm/s liegen. Dies entspricht einem Wert für die Motordrehzahl von kleiner als 1 rad/s.

Der Ausgleichsvorgang ist insbesondere als automatischer Ausgleichsvorgang ausgestaltet, bei dem das System vorzugsweise automatisch auf die Gewichtskraft des Gegenstands bzw. seine Änderungen reagiert, indem das Drehmoment am Motor des Systems entsprechend geregelt wird. Ein alternativer Ausgleichsvorgang kann beispielsweise darin bestehen, dass der Gegenstand nach einer bevorzugt manuellen Steuereingabe des Nutzers durch das System von einem Untergrund hochgezogen wird, wenn der Gegenstand zuvor auf dem Untergrund abgelegt wurde. Im Kontext dieses zweiten Ausgleichsvorgangs kann insbesondere das Drehmoment des Motors geregelt bzw. als Regelgröße verwendet werden.

Es ist im Sinne der Erfindung bevorzugt, dass sich das Zugseil einlagig innerhalb der Aufwickelvorrichtung aufwickelt. Dieses bevorzugt einlagige Aufrollen kann beispielsweise durch ein Profil innerhalb der Aufwickelvorrichtung bewirkt werden, wobei das Profil zum Beispiel als Rolle innerhalb der Aufwickelvorrichtung vorgesehen sein kann. Alternativ kann auch eine bewegliche Seilführung verwendet werden, um ein einlagiges Aufwickeln des Zugseils zu ermöglichen. Mit anderen Worten kann die Aufwickelvorrichtung Profile und/oder bewegliche Seilführungen zum bevorzugt einlagigen Aufwickeln des Zugseils umfassen.

Das elektronische Modul umfasst darüber hinaus eine Steuereinrichtung, dazu eingerichtet ist, den Ausgleichsvorgang in Bezug auf die Gewichtskraft des Gegenstands durchzuführen. Im Kontext der Erfindung ist es bevorzugt, dass vor allem die Vorrichtung zum Aufwickeln des Zugseils, der Motor und die Steuervorrichtung mit elektrischer Energie versorgt werden.

Es ist im Sinne der Erfindung bevorzugt, dass bei dem Ausgleichsvorgang eine Gegenkraft für die Gewichtskraft des Gegenstands ermittelt wird, so dass die Gewichtskraft des Gegenstands durch die der Gewichtskraft entgegengerichtete Gegenkraft ausgeglichen bzw. kompensiert wird. Vorzugsweise kann die Gegenkraft unter Verwendung des Zugseils auf den Gegenstand übertragen werden. Dadurch kann einem Nutzer des Systems das Gewicht des Gegenstands «abgenommen» werden, so dass der Nutzer - beispielsweise während der Arbeit mit dem Gegenstand - diesen nicht in einer bestimmten Höhe halten muss, sondern mit den Armen lediglich die Kraft aufbringen muss, die erforderlich ist, um die konkret zu erledigende Arbeit mit dem Gegenstand zu verrichten. Ein wesentlicher Vorteil der Erfindung besteht darin, dass die bei der Nutzung des Systems bzw. bei der Arbeit mit dem Gegenstand entstehenden Gewichtskräfte über die Rückenstruktur in den Hüftbereich des Nutzers abgeleitet werden können. Mit anderen Worten ist das System dazu eingerichtet, die auftretenden Gewichtskräfte und Belastungen in den Hüftbereich des Nutzers abzuleiten. Dazu kann die Rückenstruktur beispielsweise als Rucksacksystem ausgebildet sein.

Es ist im Sinne der Erfindung insbesondere bevorzugt, dass mit dem Ausgleichsvorgang ein Drehmoment des Motors in Abhängigkeit von der Gewichtskraft des Gegenstands bestimmbar ist. Dabei kann das ermittelte Drehmoment dazu verwendet werden, das Zugseil aufzuwickeln oder freizugeben, je nachdem wie groß die Gewichtskraft des Gegenstands ist bzw. in welchem Maße sich die Gewichtskraft des Gegenstands ändert.

Es ist im Sinne der Erfindung bevorzugt, dass das System bzw. das elektronische Modul ein Getriebe aufweist. Es ist im Sinne der Erfindung bevorzugt, dass das Getriebe eine Übersetzung zwischen 2 und 15 und bevorzugt zwischen 4 und 12 aufweist. Darüber hinaus kann das Getriebe an seinem Ausgang eine Rolle aufweisen, wobei die Rolle einen Durchmesser in einem Bereich von 10 bis 200 mm aufweist, bevorzugt in einem Bereich von 20 bis 150 mm und besonders bevorzug in einem Bereich von 40 bis 120 mm. Tests haben gezeigt, dass eine Kombination aus einer Getriebeübersetzung in einem Bereich von 4 bis 12 und einem Rollendurchmessen von 40 bis 120 mm einen guten Kompromiss darstellen, damit der Motor des Systems zwar in der Lage ist, ein ausreichend großes Drehmoment zu erzeugen, auf der anderen Seite aber kompakt ausgebildet sein kann, um in einem körpergetragenen Ausgleichssystem verwendet zu werden. Es ist im Sinne der Erfindung bevorzugt, dass der Motor ein Außenläufermotor ist. Vorteilhafterweise können durch die Verwendung eines Außenläufermotors hohe Drehmomente bei kleinen Drehzahlen erreicht werden. Darüber hinaus ist es im Sinne der Erfindung bevorzugt, dass der Motor eine Polzahl aufweist, die größer als 6 ist. Dadurch kann ein kontinuierlich hohes Drehmoment bereitgestellt werden.

Es ist im Sinne der Erfindung bevorzugt, dass eine Führung des Zugseils mittels Rollen und/ oder eines Bowdenzugs realisiert wird. Der Bowdenzug kann insbesondere ein Bowdenkabel umfassen oder von einem solchen gebildet werden. Es ist im Sinne der Erfindung bevorzugt, dass das Zugseil in oder an dem Kragarm geführt wird und so von dem zu haltenden Gegenstand, dessen Gewicht kompensiert werden soll, zu der Aufwickelvorrichtung führt.

Es ist im Sinne der Erfindung bevorzugt, dass die Rückenstruktur einen ersten Kontaktbereich und einen zweiten Kontaktbereich umfasst, wobei zumindest in den Kontaktbereichen ein Kontakt zwischen dem Nutzer des Systems und dem System gegeben ist. Vorzugsweise kann der erste Kontaktbereich als Hüftgurt ausgebildet sein, während der zweite Kontaktbereich als Rückenpolster ausgebildet sein kann. Es ist im Sinne der Erfindung bevorzugt, dass das Gewicht das Systems durch die Verwendung eines Hüftgurts als ersten Kontaktbereich optimal auf einen stabilen Körperbereich des Systemnutzers übertragen werden kann. Mit anderen Worten wird ein großer Anteil des Gewichts des Systems in den Hüftgurt eingetragen und durch diesen auf einen stabilen Körperbereich des Nutzers verteilt. Dadurch kann der Tragekomfort des vorgeschlagenen Systems deutlich erhöht werden.

Es ist im Sinne der Erfindung bevorzugt, dass der erste und der zweite Kontaktbereich Bestandteile der Rückenstruktur des Systems sind. Vorzugsweise wird der erste Kontaktbereich von einem Hüftgurt gebildet, den der Nutzer um seine Hüften legen kann. Der zweite Kontaktbereich kann insbesondere von einem Rückenpolster gebildet werden, das zwischen oder an den Schulterblättem anliegt und mit zwei Schultergurten verbunden sein kann. Die Schultergurte können - wie im Bereich der Rucksäcke bekannt - über die Schultern des Systemnutzers geführt werden und in den Hüftgurt der Rückenstruktur einmünden. Durch die rucksackähnliche Gestaltung der Rückenstruktur kann der Umgang mit dem vorgeschlagenen System erleichtert und seine Akzeptanz bei den Nutzern wesentlich erhöht werden.

Vorzugsweise ist ein Abstand zwischen dem ersten Kontaktbereich und dem zweiten Kontaktbereich einstellbar ausgebildet, um das System an den Nutzer anzupassen und ein durch den Gegenstand hervorgerufenes Kippmoment auszugleichen. Dieses Kippmoment wirkt vorzugsweise in die Raumrichtung "nach vorne", so dass der Nutzer des Systems bei dessen Verwendung und insbesondere, wenn ein schwerer Gegenstand an dem Zugseil befestigt ist, in die Raumrichtung "nach vorne" gezogen werden kann. Es ist im Sinne der Erfindung bevorzugt, dass das Kippmoment als um eine Horizontalachse des Systems wirkend betrachtet wird. Dabei kann es sich zum Beispiel um die erste oder zweite Horizontalachse des Systems handeln. Um dieses Kippmoment optimal auszugleichen, ist es im Sinne der Erfindung bevorzugt, dass der Abstand zwischen dem ersten Kontaktbereich und dem zweiten Kontaktbereich der Rückenstruktur des Systems möglichst groß gewählt wird, um eine gute Hebelwirkung zu erreichen. Dies wird insbesondere durch die Einstellbarkeit des Abstands zwischen dem ersten Kontaktbereich und dem zweiten Kontaktbereich der Rückenstruktur ermöglicht. Tests haben gezeigt, dass mit der Erfindung ein durch den Gegenstand hervorgerufenes Kippmoment, das vorzugsweise in eine Raumrichtung «nach vorne» wirkt, besonders gut ausgeglichen werden kann. Der Ausgleich erfolgt insbesondere über den Rücken des Nutzers des Systems, indem die Kräfte bzw. das Kippmoment in die Rückenstruktur des Systems eingeleitet werden.

Insbesondere weist das vorgeschlagene System eine Linearführung auf, über die der Abstand zwischen Rückenpolster und Hüftgurt eingestellt werden kann. Damit kann der Nutzer, angepasst an seine Körpergröße, einen jeweils möglichen maximalen Abstand zwischen dem ersten und dem zweiten Kontaktbereich der Rückenstruktur einstellen. Die Linearführung leistet somit einen wesentlichen Beitrag, um das Kippmoment, das von dem Gegenstand, dessen Gewicht durch das System ausgeglichen werden soll, zu kompensieren.

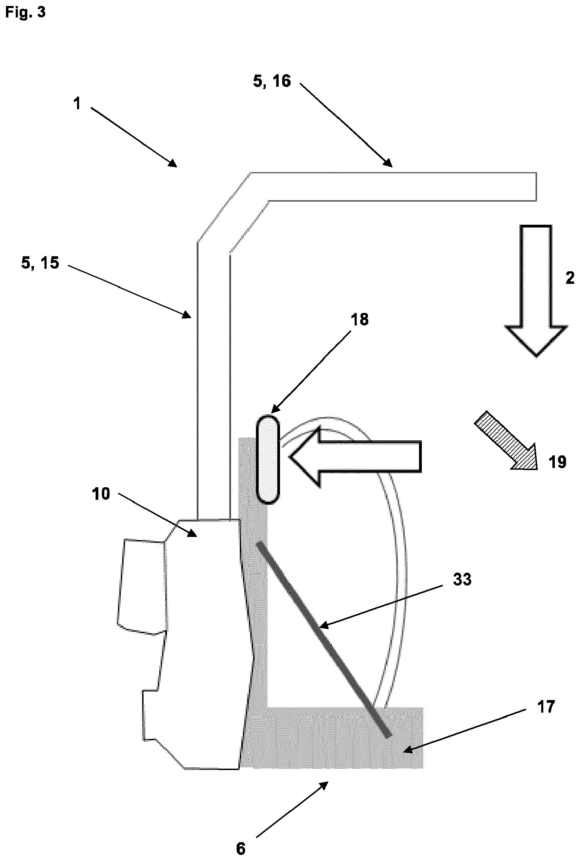

Es ist im Sinne der Erfindung bevorzugt, dass das System eine Strebe aufweist, um ein durch den Gegenstand hervorgerufenes Kippmoment in einen ersten Kontaktbereich des Systems einzuleiten. Vorzugsweise wird das Kippmoment insbesondere in den Hüftgurt des Systems geleitet, wo es auf einen stabilen Körperbereich des Nutzers verteilt wird. Durch die Vorsehung der Strebe kann die Ableitung des Kippmoments weiter verbessert werden. Es ist im Sinne der Erfindung bevorzugt, dass die Strebe die Rückenstruktur mit dem Hüftgurt verbindet. Für eine verbesserte Krafteinleitung in den Hüftgurt kann die Strebe mit einem Biegeblech versteift werden. Diese bevorzugte Ausgestaltung der Erfindung ist in Fig. 3 dargestellt.

Es ist im Sinne der Erfindung bevorzugt, dass der Kragarm klappbar ausgebildet ist. Dazu kann der Kragarm mindestens ein Gelenk umfassen. Beispielsweise kann das Gelenk im Rückenabschnitt oder im Kopfabschnitt oder im Übergangsbereich zwischen Rücken- und Kopfabschnitt des Kragarms angeordnet sein. Auch eine Kombination verschiedener Gelenke ist möglich. Durch die Klappbarkeit des Kragarms kann eine Packgröße für das zusammengelegte System verringert werden, so dass das vorgeschlagene System bei Nicht-Benutzung einfacher transportiert werden kann. Außerdem kann durch die Klappbarkeit des Systems sein Handling erleichtert werden. Die Klappbarkeit des Kragarms kann durch verschiedene Verfahren und Vorrichtungen ermöglicht werden.

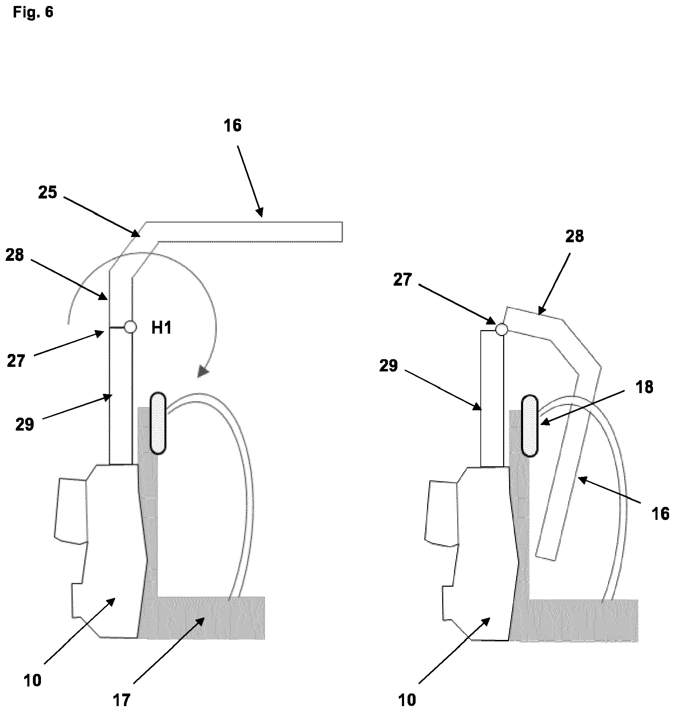

Beispielsweise kann in dem Rückenabschnitt des Kragarms ein Gelenk vorgesehen sein, das den Rückenabschnitt in einen oberen Bereich und einen unteren Bereich teilt und das es ermöglicht, dass der obere Bereich des Rückenabschnitts, sowie der Kopfabschnitt des Kragarms nach vome gekippt bzw. geklappt werden können. Dadurch kann insbesondere erreicht werden, dass der Kragarm nach vorne zwischen die Schultergurte der Rückenstruktur geklappt werden kann, wodurch die Packgröße des Systems deutlich verringert werden kann. Diese bevorzugte Ausgestaltung der Erfindung ist in Fig. 6 dargestellt.

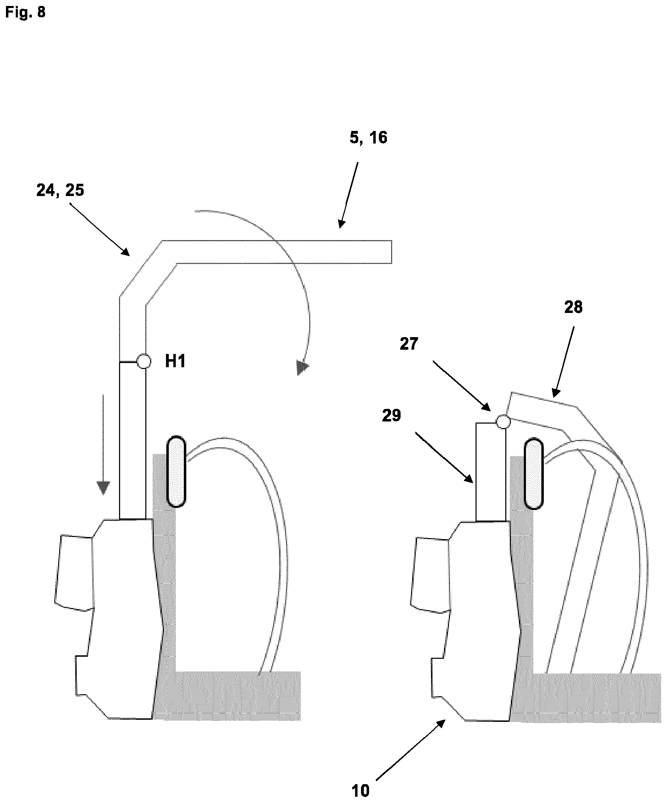

Darüber hinaus kann es im Sinne der Erfindung bevorzugt sein, dass der untere Bereich des Rückenabschnitts des Kragarms in der Rückenstruktur des Systems versenkt werden kann. Dieses Merkmal der Erfindung wird in Fig. 8 abgebildet und kann beispielsweise mit der in Fig. 6 dargestellten, nach vorne klappbaren Ausgestaltung der Erfindung kombiniert werden, so dass die Packgröße des zusammengelegten Systems weiter erheblich reduziert werden kann. In dieser Ausgestaltung der Erfindung kann in der Rückenstruktur ein Hohlraum zur Aufnahme des unteren Bereiches des Rückenabschnitts des Kragarms vorgesehen sein, in den der untere Bereich des Rückenabschnitts des Kragarms hineingeschoben werden kann. Ferner kann ein Rastmechanismus vorgesehen sein, mit dem der Rückenabschnitt in den verschiedenen Positionen befestigt werden kann. Es ist im Sinne der Erfindung insbesondere bevorzugt, dass der Rückenabschnitt des Kragarms in der versenkten und in der maximal ausgefahrenen Position fixiert werden kann. Es kann darüber hinaus bevorzugt sein, dass der Rückenabschnitt auch in Zwischenpositionen in der Rückenstruktur des Systems befestigbar ist. Dadurch können beispielsweise auch verschiedene Arbeitshöhen des Systems eingestellt werden. Ferner kann auf diese Weise festgelegt werden, ob der Kragarm über dem Kopf des Systemnutzers oder neben seinem Kopf geführt wird.

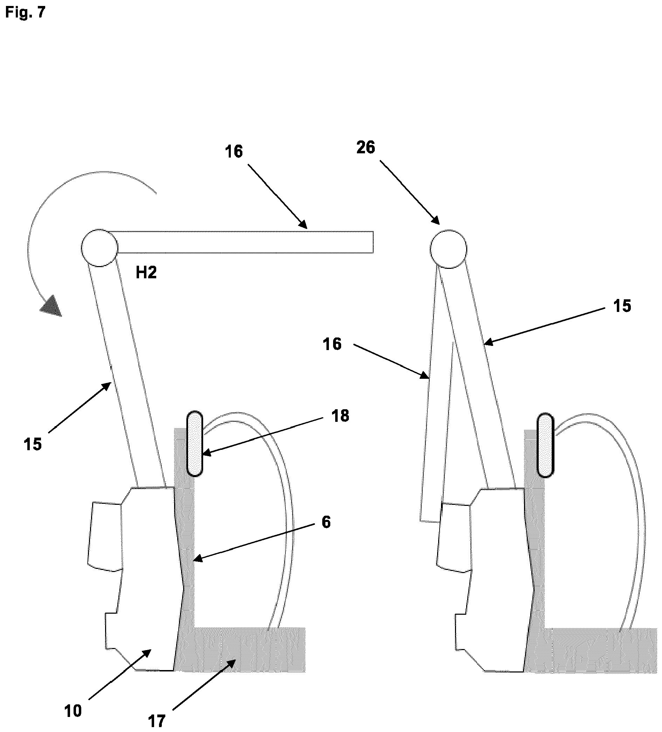

Es kann im Sinne der Erfindung auch bevorzugt sein, dass der Übergangsbereich zwischen dem Rückenabschnitt und dem Kopfabschnitt des Kragarms als Gelenk ausgebildet ist, wobei es das Gelenk ermöglicht, dass der Kopfabschnitt des Kragarms nach hinten geklappt werden kann. Dadurch kann zum einen die Packgröße eines Systems gemäß dieser Ausgestaltung der Erfindung verringert werden, zum anderen kann ermöglicht werden, dass das System von seinem Nutzer wie ein Rucksack getragen werden kann. Diese bevorzugte Ausgestaltung der Erfindung ist in Fig. 7 dargestellt.

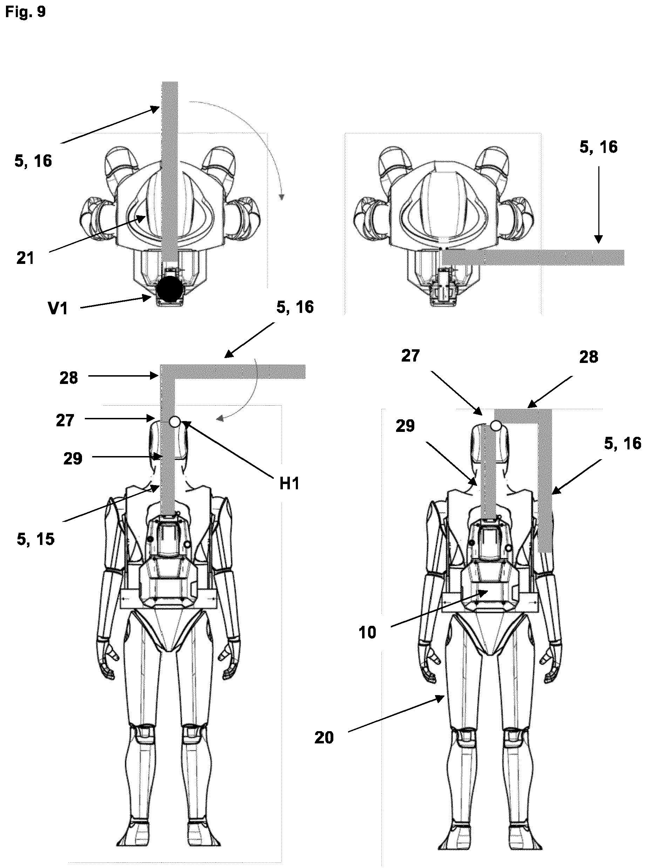

Das System kann darüber hinaus so ausgebildet sein, dass der Kopfabschnitt des Kragarms um einen Drehwinkel um eine vertikale Drehachse zur Seite gedreht werden kann. Anschließend kann der Kopfabschnitt des Kragarms neben dem Körper des Nutzers in eine Raumrichtung "nach unten" geklappt werden. Diese bevorzugte Ausgestaltung der Erfindung ist in Fig. 9 abgebildet. Es ist im Sinne der Erfindung besonders bevorzugt, dass der Kopfabschnitt des Kragarms im Wesentlichen um 90 Grad um eine vertikale Drehachse zur Seite gedreht wird, bevor er neben den Körper des Nutzers "nach unten" geklappt wird. Der Fachmann weiß, dass der Begriff "im Wesentlichen 90 Grad" kein unklarer Begriff ist. Der Begriff "im Wesentlichen 90 Grad" bedeutet im Sinne der Erfindung bevorzugt, dass damit ein Winkel von ca. 90 Grad gemeint ist, der aber beispielsweise um +/- 5 Grad von einem mathematisch exakten rechten Winkel abweichen kann.

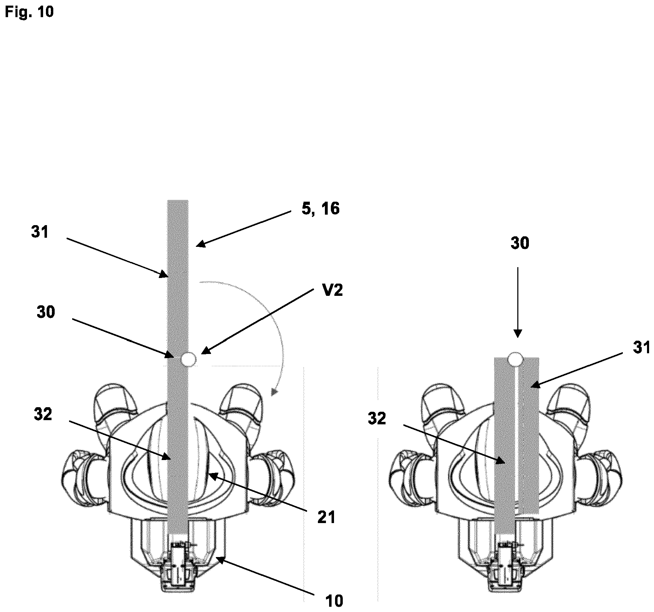

In einer weiteren bevorzugten Ausgestaltung der Erfindung kann der Kopfabschnitt des Kragarms ein Gelenk umfassen, wobei das Gelenk den Kopfabschnitt des Kragarms in einen vorderen Bereich und einen hinteren Bereich unterteilt. Vorzugsweise ermöglicht es das Gelenk, dass der vordere Bereich des Kopfabschnitts des Kragarms nach hinten geklappt werden kann, so dass auf diese Weise die Packgröße des zusammengelegten Systems reduziert werden kann. In dieser Ausführungsform der Erfindung wird der vordere Bereich des Kopfabschnitt des Kragarms vorzugsweise um eine vertikale Drehachse nach hinten geklappt, wobei die vertikale Drehachse durch das Gelenk verläuft, welches den Kopfabschnitt des Kragarms in einen vorderen Bereich und einen hinteren Bereich unterteilt. Diese bevorzugte Ausgestaltung der Erfindung ist in Fig. 10 dargestellt.

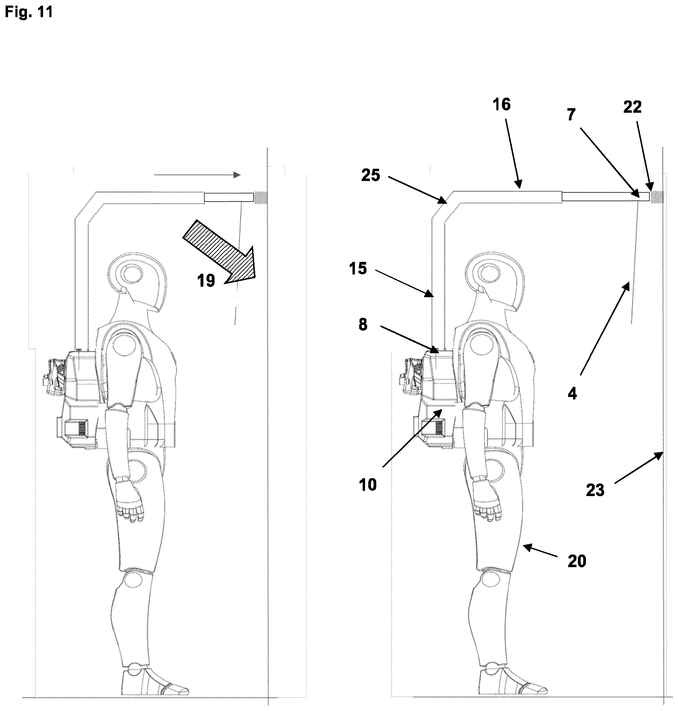

Es ist im Sinne der Erfindung bevorzugt, dass der Kragarm einen Stützpunkt umfasst, mit dem das System an einer Wand abstützbar ist. Die Vorsehung eines solchen Stützpunktes, der bevorzugt am vorderen Ende des Kopfabschnittes des Kragarms vorliegt, ermöglicht es vorteilhafterweise, das in die Raumrichtung nach vorne wirkende und von dem Gegenstand hervorgerufene Kippmoment aufzunehmen, so dass der Nutzer des Systems besonders stabil und sicher mit dem Gegenstand arbeiten kann. Es ist im Sinne der Erfindung bevorzugt, dass der Stützpunkt ein elastisches Material und/oder mindestens eine Rolle umfasst oder von dem elastischen Material und/oder der mindestens einen Rolle gebildet wird. Durch das elastische Material können Beschädigungen der Mauer oder der Wand, an der sich das System mit dem Stützpunkt abstützt, vermieden werden. Die Verwendung von Rollen sorgt für eine gewisse Beweglichkeit des Stützpunkts, mit der dem dynamischen Charakter der Arbeit mit Werkzeuggeräten Rechnung getragen werden kann. Diese bevorzugte Ausgestaltung der Erfindung ist in Fig. 11 abgebildet. Vorzugsweise kann der Stützpunkt im Sinne der Erfindung auch als Anlagepunkt bezeichnet werden, der vorzugsweise im Bereich einer Spitze des Kragarms, d.h. seinem vorderen oder ersten Ende, angeordnet ist. Das vorgeschlagene System kann durch die Vorsehung des Stütz- oder Anlagepunkts an einer Wand abgestützt werden, so dass das Kippmoment nicht mehr auf den Nutzer wirkt, sondern von ihm ferngehalten wird.

In einer weiteren Ausgestaltung der Erfindung kann der Kopfabschnitt des Kragarms in horizontaler Richtung teleskopierbar ausgebildet sein. Dadurch können vorteilhafterweise unterschiedliche Längen des Kopfabschnittes des Kragarms eingestellt werden. Auf diese Weise kann das System besonders einfach und unkompliziert an verschiedene Gegenstände angepasst werden, die an dem Zugseil des Systems befestigt werden können. Wenn der Gegenstand ein Werkzeuggerät ist, kann mit dem unterschiedlichen langen Kopfabschnitt unterschiedlich langen Werkzeuglängen des Werkzeuggeräts begegnet werden. Beispielsweise können Werkzeuggerät unterschiedlich lange Werkzeuge aufweisen, je nachdem, ob es sich um ein Meißelgerät, einen Bohrhammer, ein Kernbohrgerät oder ein sonstiges Werkzeuggerät handelt. Durch den bevorzugt teleskopierbar ausgebildeten Kopfabschnitts des Kragarms kann das System besonders flexibel in unterschiedlichen Gewerken und für unterschiedliche Typen von Werkzeuggeräten eingesetzt werden.

In einem zweiten Aspekt betrifft die Erfindung ein elektronisches Modul zum Ausgleich einer Gewichtskraft eines Gegenstands. Die für das vorgeschlagene System und seine Komponenten eingeführten Begriffe, Definitionen und technischen Vorteile gelten vorzugsweise für das elektronische Modul analog. Im Kontext des elektronischen Moduls wird der Gegenstand, dessen Gewichtskraft ausgeglichen werden soll, mit einem Zugseil an dem Modul befestigt. Das elektronische Modul weist die folgenden Komponenten zum Ausgleich einer Gewichtskraft eines Gegenstands auf:
- eine Vorrichtung zum Aufwickeln eines Zugseils und
- einen Motor zum Antrieb der Vorrichtung zum Aufwickeln eines Zugseils,
wobei das System dazu eingerichtet ist, eine Gegenkraft für die Gewichtskraft des Gegenstands zu ermitteln und auf den Gegenstand zu übertragen. Es ist im Sinne der Erfindung insbesondere bevorzugt, dass eine Steuereinrichtung des Systems dazu eingerichtet ist, eine Gegenkraft in Bezug auf die Gewichtskraft des Gegenstands einzustellen. Vorzugsweise kann das System - beispielsweise durch seine Steuereinrichtung - dazu eingerichtet sein, ein Kräftegleichgewicht zwischen der Gewichtskraft des Gegenstands auf der einen Seite und der Gegenkraft auf der anderen Seite herzustellen. Insbesondere kann die Steuereinrichtung dazu eingerichtet sein, einen Ausgleichsvorgang in Bezug auf die Gewichtskraft des Gegenstands durchzuführen. Neben der körpergetragenen Ausgestaltung des Systems kann das elektronische Modul auch als stand alone-Vorrichtung bereitgestellt werden. Auf diese Weise muss es nicht mehr unter Verwendung der Rückenstruktur von einem Nutzer getragen werden, sondern es kann als externe Struktur ausgeführt sein. Im Kontext dieses Aspekts der Erfindung kann das elektronische Modul an einem Arbeitsort aufgestellt werden, wobei ein Gegenstand unter Verwendung eines Zugseils und ggf. Umlenkrollen oder ähnlicher Hilfsmittel an dem elektronischen Modul befestigt werden kann.

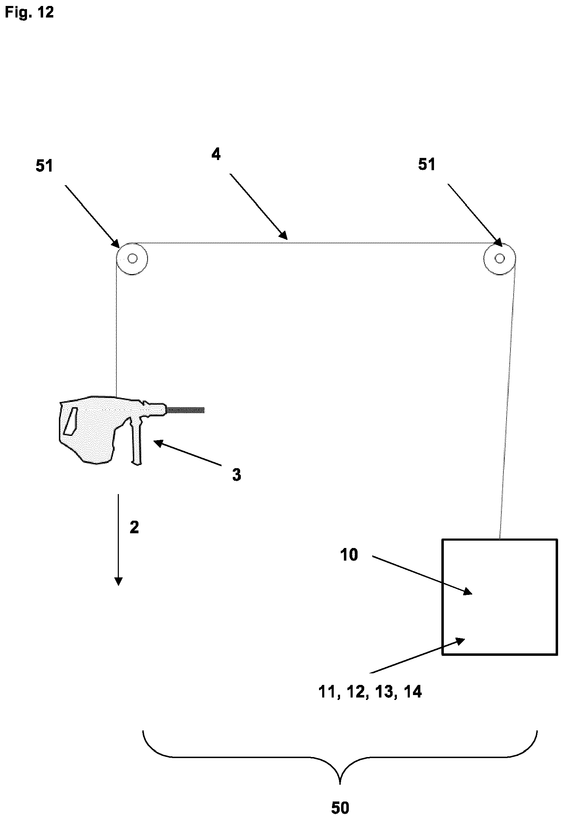

Insofern begrifft die Erfindung in einem weiteren Aspekt ein Kit umfassend das elektronische Modul, ein Zugseil und mindestens eine Umlenkrolle zum Ausgleich einer Gewichtskraft eines Gegenstands, der an dem Zugseil befestigbar ist. Diese bevorzugte Ausgestaltung der Erfindung ist in Fig. 12 dargestellt. Die mindestens eine Umlenkrolle kann beispielsweise an einer Decke oberhalb eines Arbeitsorts angebracht werden. Dazu können geeignet Träger- oder Rahmenstrukturen verwendet werden. Es kann im Sinne der Erfindung auch bevorzugt sein, dass die Träger- oder Rahmenstruktur als Führungsschiene ausgebildet ist, so dass eine Position des Kits verändert werden kann. Mit anderen Worten kann auf diese Weise ein mobiles Arbeits-Kit zum zum Ausgleich einer Gewichtskraft eines Gegenstands bereitgestellt werden, wobei der Gegenstand insbesondere als Werkzeuggerät ausgebildet sein kann.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. In den Figuren sind gleiche und gleichartige Komponenten mit gleichen Bezugszeichen beziffert. Es zeigen:
- Fig. 1: Ansicht einer bevorzugten Ausgestaltung des vorgeschlagenen Systems
- Fig. 2: Ansicht einer bevorzugten Ausgestaltung des vorgeschlagenen Systems mit längeneinstellbarer Rückenstruktur
- Fig. 3: Ansicht einer bevorzugten Ausgestaltung des vorgeschlagenen Systems mit Stützstrebe
- Fig. 4: Ansicht einer bevorzugten Ausgestaltung des vorgeschlagenen Systems, wobei der Kopfabschnitt des Kragarms über dem Kopf des Nutzers verläuft
- Fig. 5: Ansicht einer bevorzugten Ausgestaltung des vorgeschlagenen Systems, wobei der Kopfabschnitt des Kragarms neben dem Kopf des Nutzers verläuft
- Fig. 6: Ansicht einer bevorzugten Ausgestaltung des vorgeschlagenen Systems mit einem Gelenk im Rückenabschnitt des Kragarms
- Fig. 7: Ansicht einer bevorzugten Ausgestaltung des vorgeschlagenen Systems mit einem Gelenk im Übergangsbereich zwischen dem Rückenabschnitt und dem Kopfabschnitt des Kragarms
- Fig. 8: Ansicht einer bevorzugten Ausgestaltung des vorgeschlagenen Systems, bei dem der Rückenabschnitt des Kragarms in der Rückenstruktur versenkt werden kann
- Fig. 9: Ansicht einer bevorzugten Ausgestaltung des vorgeschlagenen Systems mit einem dreh- und klappbaren Kragarm
- Fig. 10: Ansicht einer bevorzugten Ausgestaltung des vorgeschlagenen Systems mit einem Gelenk im Kopfabschnitt des Kragarms
- Fig. 11: Ansicht einer bevorzugten Ausgestaltung des vorgeschlagenen Systems mit einem Stütz- bzw. Auflagepunkt für eine Wand
- Fig. 12: Ansicht einer bevorzugten Ausgestaltung des vorgeschlagenen Kits als stand aloneVorrichtung

### Ausführungsbeispiele und Figurenbeschreibung:

Figur 1 zeigt eine bevorzugte Ausgestaltung des vorgeschlagenen Systems 1, das von einem Nutzer 20 getragen wird. Das System 1 umfasst einen Kragarm 5, der in dem in Fig. 1 abgebildeten Beispiel der Erfindung oberhalb des Kopfes 21 des Nutzers 20 verläuft. Der Kragarm 5 kann Abschnitte aufweisen, die als Rückenabschnitt 15, Kopfabschnitt 16 und Übergangsabschnitt 25 bezeichnet werden. Der Rückenabschnitt 15 ist in einem Rück- oder hinterem Bereich des Systems 1 angeordnet und verläuft im Wesentlichen parallel zu einer Wirbelsäule des Nutzers 20. Der Kopfabschnitt 16 verläuft im Wesentlichen senkrecht zu dem Rückenabschnitt 15 des Kragarms 5, so dass Rückenabschnitt 15 und Kopfabschnitt 16 einen im Wesentlichen rechten Winkel einschließen. Der Kragarm 5 kann L-förmig ausgebildet sein oder einen Übergangsbereich 24 aufweisen, der einen schräg zwischen dem Rückenabschnitt 15 und dem Kopfabschnitt 16 angeordneten Übergangsabschnitt 25 aufweist. Der Kragarm 5 weist ein vorderes oder ersten Ende 7, sowie ein zweites oder hinteres Ende 8 auf, welches in die Rückenstruktur 6 des Systems 1 einmündet. Mit der Rückenstruktur 6 wird es ermöglicht, dass das System 1 von dem Nutzer 20 auf dem Rücken getragen wird. Im Rückenbereich des Nutzers 20 ist ein elektronisches Modul 10 vorgesehen, dass verschiedene Komponenten des Systems 1 beinhaltet. Insbesondere sind eine Energiequelle 11, eine Vorrichtung 12 zum Aufwickeln eines Zugseils 4, eine Steuereinrichtung 14 und ein Motor 13 in dem elektronischen Modul 10 untergebracht. Die Rückenstruktur 6 bzw. das elektronische Modul 10 können mit einem ersten Kontaktbereich 17 und einem zweiten Kontaktbereich 18 an dem Nutzer 20 befestigt werden. Der erste Kontaktbereich 17 kann als Hüftgurt ausgebildet sein, während der zweite Kontaktbereich 18 vorzugsweise als Rückenpolster ausgebildet ist. An dem Zugseil 4 kann ein Gegenstand 3 befestigt werden, der eine Gewichtskraft 2 aufweist. Bei der Gewichtskraft 2 handelt es sich vorzugsweise um das Gewicht des Gegenstands 3, wobei die Gewichtskraft 2 in Richtung des Erdbodens zeigt. Diese Richtung wird im Sinne der Erfindung bevorzugt als Raumrichtung «nach unten U» bezeichnet. Die anderen Raumrichtungen «nach oben O», «nach vorne V» oder «nach hinten H» sind ebenfalls in Fig. 1 dargestellt. Der Pfeil nach unten, der mit dem Bezugszeichen 2 versehen ist, symbolisiert die Gewichtskraft 2 des Gegenstand 3 und gibt ihre Richtung an. Der Gegenstand 3 kann vorzugsweise als Werkzeuggerät ausgebildet sein und über das Zugseil 4 an dem System 1 befestigt werden. Dazu können einfache Befestigungsmittel, wie Karabinerhaken, oder spezielle Befestigungsmittel oder Aufnahmevorrichtungen verwendet werden.

Das Zugseil 4 führt von dem Gegenstand 3 in Richtung des Kragarms 5 und wird dann in oder an dem Kragarm 5 in Richtung der Rückenstruktur 6 bzw. des elektronischen Moduls 10 geführt. In dem elektronischen Modul 10 befindet sich die Aufwickelvorrichtung 12, mit der das Zugseil 4 aufgewickelt werden kann. Dadurch kann die effektive Länge des Zugseils 4 verlängert oder verkürzt werden. Insbesondere kann die Länge des Zugseils 4 an die Gewichtskraft 2 des Gegenstands 3 angepasst werden, wobei die Gewichtskraft 2 des Gegenstands 3 in einem Ausgleichsvorgang bestimmt wird. Die Aufwickelvorrichtung 12 wird von einem Motor 13 angetrieben, der ebenfalls in dem elektronischen Modul 10 angeordnet vorliegen kann. Es ist im Sinne der Erfindung bevorzugt, dass der Ausgleichsvorgang einen Regel- und Steuerprozess darstellt, dessen Ziel es ist, dass der Motor 13 im Stillstand ist. Mit anderen Worten wird der Motor 13 durch den Ausgleichsvorgang auf eine Drehzahl null geregelt. Das vorgeschlagene System 1 ermöglicht mit dem Ausgleichsvorgang, dass eine Gewichtskraft 2 des Gegenstands 3 kompensiert wird, so dass das vorgeschlagene System 1 bevorzugt auch als Balancing System bezeichnet werden kann. Die Kompensation der Gewichtskraft 2 geschieht vorzugsweise durch ein Zusammenspiel von Aufwickelvorrichtung 12, Motor 13 und Steuereinrichtung 14, wobei die genannten Komponenten des Systems 1 von der Energiequelle 11 mit elektrischer Energie versorgt werden. Vorzugsweise handelt es sich bei der Energiequelle 11 um eine Batterie oder um einen Akku. Die Kompensation der Gewichtskraft 2 des Gegenstands 3 erfolgt insbesondere durch eine Gegenkraft 9, die auf den Gegenstand 3 ausgeübt und mittels des Zugseils 4 auf den Gegenstand 3 übertragen wird. Mit anderen Worten gleicht die Gegenkraft 9 die Gewichtskraft 2 des Gegenstands 3 aus und sorgt somit dafür, dass der Nutzer 20 des Systems 1 den Gegenstandstand 3 nicht entgegen der Schwerkraft halten muss, sondern lediglich die zur Arbeit mit den Gegenstand 3 erforderlich Kraft aufbringen muss. Dadurch kann das System 1 die Arbeit mit dem Gegenstand 3 für den Nutzer 20 wesentlich erleichtern. Die Gegenkraft 9 ist in den Figuren mit einem Pfeil in die Raumrichtung «nach oben» und dem Bezugszeichen 9 markiert.

Ein Ausgleichsvorgang findet insbesondere dann statt, wenn ein (neuer) Gegenstand 3 an dem Zugseil 4 befestig wird oder bei Austausch des Gegenstands 3. Insbesondere kann die Kompensation der Gewichtskraft 2 des Gegenstands 3 statisch auf dessen Gewicht geregelt werden. Es kann aber im Sinne der Erfindung auch bevorzugt sein, dass der Ausgleichsvorgang kontinuierlich stattfindet und dass die Gegenkraft 9 dynamisch an Änderungen der Gewichtskraft 2, die bei der Arbeit mit dem Gegenstand 3 kurzfristig auftreten können, angepasst wird.

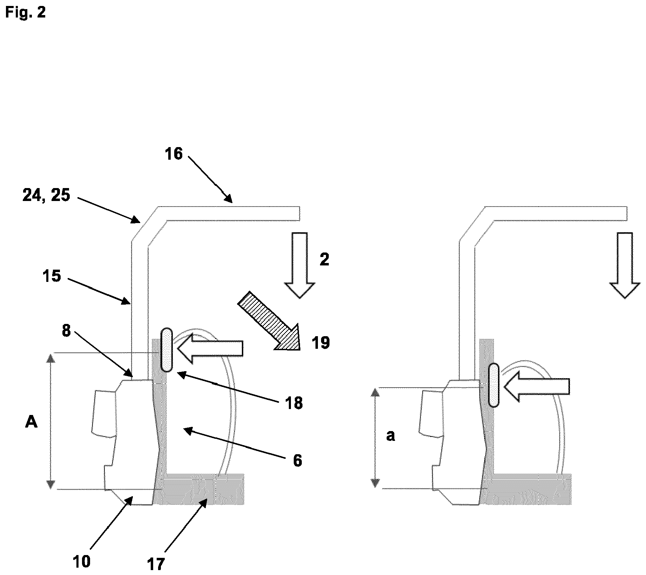

Fig. 2 zeigt eine bevorzugte Ausgestaltung des vorgeschlagenen Systems 1 mit einer längeneinstellbaren Rückenstruktur 6. Insbesondere kann bei dem in Fig. 2 dargestellten Ausführungsbeispiel der Erfindung ein Abstand A zwischen dem ersten Kontaktbereich 17 und dem zweiten Kontaktbereich 18 der Rückenstruktur 6 eingestellt werden. Es ist im Sinne der Erfindung ganz besonders bevorzugt, dass der Abstand A zwischen einem Hüftgurt 17 und einem Rückenpolster 18 der Rückenstruktur 6 eingestellt werden kann. Durch die Einstellbarkeit des Abstandes A zwischen Hüftgurt 17 und Rückenpolster 18 kann ein Kippmoment 19, das von dem Gegenstand 3 erzeugt wird, kompensiert werden. Das Kippmoment 19 ist in Fig. 2 mit einem schraffierten Pfeil und dem Bezugszeichen 19 dargestellt. Das Kippmoment 19 entsteht durch die Gewichtskraft 2 des Gegenstands 3, der das System 1 in die Raumrichtung nach unten U zieht. Dadurch wirkt insgesamt ein Kippmoment 19, das nach unten und nach vorne wirkt und insbesondere den Kragarm 5 des Systems 1 in diese Richtung zieht. Es hat sich gezeigt, dass ein besonders großer Abstand A zwischen dem Hüftgurt 17 und dem Rückenpolster 18 als Kontaktflächen zwischen Rückenstruktur 6 und Nutzer 20 dieses Kippmoment 19 besonders wirksam ausgleicht, da auf diese Weise besonders gute Hebelverhältnisse herrschen. In der linken Hälfte von Fig. 2 wird ein großer Abstand A zwischen Hüftgurt 17 und Rückenpolster 18 dargestellt, der durch einen Großbuchstaben A symbolisiert wird, während in der rechten Hälfte von Fig. 2 ein kleiner Abstand a zwischen Hüftgurt 17 und Rückenpolster 18 dargestellt wird, der durch einen Kleinbuchstaben a symbolisiert wird. Darüber hinaus werden in Fig. 2 die einzelnen Abschnitte 15, 16, 25 des Kragarms 5 dargestellt, wobei der Kragarm 5 einen Rückenabschnitt 15, einen Kopfabschnitt 16 und einen Übergangsabschnitt 25 umfassen kann. Während der Rückenabschnitt 15 und der Kopfabschnitt 16 im Wesentlichen senkrecht zueinander angeordnet sind, liegt der Übergangsabschnitt 25 in einem Übergangsbereich 24 zwischen Rückenabschnitt 15 und Kopfabschnitt 16 des Kragarms 5 vor. Die Einstellbarkeit des Abstandes A kann insbesondere durch die Vorsehung einer Linearführung (nicht dargestellt) ermöglicht werden.

Fig. 3 zeigt eine bevorzugte Ausgestaltung des vorgeschlagenen Systems 1 mit einer Stützstrebe 33, die zwischen Hüftgurt 17 und Rückenpolster 18 der Rückenstruktur 6 angeordnet vorliegen kann. Mit der Stützstrebe 33 kann die Einleitung des Kippmoments 19 in die Rückenstruktur 6, insbesondere in den Hüftgurt 17, weiter verbessert werden, so dass mit der Stützstrebe 33 eine verbesserte Krafteinleitung in den Hüftgurt 17, sowie eine weiter verbesserte Entlastung für den Nutzer 20 ermöglicht werden kann.

Fig. 4 zeigt eine bevorzugte Ausgestaltung des vorgeschlagenen Systems 1, wobei der Kopfabschnitt 16 des Kragarms 5 über dem Kopf 21 des Nutzers 20 verläuft, während Fig. 5 eine bevorzugte Ausgestaltung des vorgeschlagenen Systems 1 zeigt, bei der der Kopfabschnitt 16 des Kragarms 5 neben dem Kopf 21 des Nutzers 20 verläuft. Durch die unterschiedlichen Ausgestaltungsmöglichkeiten des vorgeschlagenen Systems 1 kann das System 1 mit unterschiedlichen Gegenständen 3 bzw. Werkzeuggeräten zusammen verwendet werden. Dadurch ist es besonders vielfältig einsetzbar und kann beispielsweise von Handwerkern unterschiedlicher Gewerke verwendet werden. Darüber hinaus können unterschiedliche Typen von Werkzeuggeräten an dem Zugseil 4 des Systems 1 befestigt werden.

Fig. 6 zeigt eine bevorzugte Ausgestaltung des vorgeschlagenen Systems 1 mit einem Gelenk 27 im Rückenabschnitt 15 des Kragarms 5. Es ist im Sinne der Erfindung bevorzugt, dass im Kragarm 5 des Systems 1 mindestens ein Gelenk 26, 27, 30 angeordnet ist, so dass eine Klappbarkeit des Kragarms 5 ermöglicht wird. Beispielsweise unterteilt das Gelenk 27 den Rückenabschnitt 15 des Kragarms 5 in einen oberen Teil 28 und einen unteren Teil 29, wobei der obere Teil 28 zusammen mit den Kopfabschnitt 16 des Kragarms 5 in eine Raumrichtung nach vorne geklappt werden kann. Diese Drehbarkeit des oberen Bereichs 28 des Rückenabschnitts 15 und des Kopfabschnitts 16 des Kragarms 5 wird in Fig. 6 durch den kreisförmigen Pfeil angedeutet. Es ist im Sinne der Erfindung bevorzugt, dass die Drehung des oberen Bereichs 28 des Rückenabschnitts 15 und des Kopfabschnitts 16 des Kragarms 5 um eine erste horizontale Achse H1 erfolgt, die vorzugsweise durch das Gelenk 27 im Rückenabschnitt 15 des Kragsarms 5 verläuft. Der obere Teil 28 und der Kopfabschnitt 16 des Kragarms 5 können beispielsweise neben dem Kopf 21 des Nutzers 20 abgelegt werden und das System 1 kann in dieser Ausgestaltung der Erfindung und aufgrund der geringen Packgröße besonders einfach als Rucksack getragen werden. Es ist im Sinne der Erfindung bevorzugt, dass der untere Bereich 29 des Rückenabschnitts 15 nach unten mit dem zweiten oder hinteren Ende 8 des Kragarms 5 abschließt.

Fig. 7 zeigt eine bevorzugte Ausgestaltung des vorgeschlagenen Systems 1 mit einem Gelenk 26 im Übergangsbereich 24 zwischen dem Rückenabschnitt 15 und dem Kopfabschnitt 16 des Kragarms 5. In dieser Ausführungsform der Erfindung kann der Kopfabschnitt 16 des Kragarms 5 um eine zweite horizontale Achse H2 nach vorne geklappt werden, so dass ebenfalls die Packgröße des zusammengelegten Systems 1 deutlich reduziert wird.

Um die Packgröße weiter zu verringern, kann der untere Teil 29 des Rückenabschnitts 15 des Kragarms 5 in die Rückenstruktur 6 versenkt werden. Diese Ausgestaltung der Erfindung ist in Fig. 8 dargestellt, wobei die Versenkbarkeit des Rückenabschnitts 15 des Kragarms 5 in die Rückenstruktur 6 durch den nach unten weisenden Pfeil, der parallel zum Rückenabschnitt 15 verläuft, symbolisiert wird. Analog zu Fig. 6 zeigt Fig. 8 eine Ausführungsform des vorgeschlagenen Systems, bei dem im Rückenabschnitt 15 des Kragarms 5 ein Gelenk 27 vorgesehen ist, welches den Rückenabschnitt 15 in einen oberen Bereich 28 und einen unteren Bereich 29 teilt. Dargestellt sind in den Fig. 6 bis 8 auch die Kontaktbereiche 17, 18, die von einem Hüftgurt und einem Rückenpolster gebildet werden können und die bevorzugt die Rückenstruktur 6 des vorgeschlagenen Balancing-Systems 1 bilden. Selbstverständlich ist es auch möglich, die Versenkbarkeit des Rückenabschnitts 15 des Kragarms 5 mit der in Fig. 7 dargestellten Ausgestaltung der Erfindung zu kombinieren, bei der das Gelenk 26 im Übergangsbereich 25 zwischen Rückenabschnitt 15 und Kopfabschnitt 16 des Kragarms 5 angeordnet vorliegt.

Fig. 9 zeigt eine bevorzugte Ausgestaltung des vorgeschlagenen Systems 1 mit einem mit einem dreh- und klappbaren Kragarm 5. Die oberen Abbildungen von Fig. 9 zeigen eine Draufsicht von oben auf eine bevorzugte Ausführungsform des Systems 1, bei der der Kragarm 5 um eine erste vertikale Achse V1 um einen Drehwinkel zur Seite gedreht werden kann. Der Drehwinkel kann beispielsweise im Wesentlichen 90 Grad betragen, also einen im Wesentlichen rechten Winkel darstellen. Vorzugsweise verläuft die erste vertikale Achse V1 im Wesentlichen parallel zu dem Rückenabschnitt 15 des Kragarms 5 und sie ragt aus der Zeichenebene der oberen Abbildungen von Fig. 9 heraus, kommt dem Leser also entgegen. In der rechten oberen Abbildung von Fig. 9 liegt der Kopfabschnitt 16 des Kragarms 5 um einen rechten Winkel gedreht vor im Vergleich zum Ausgangszustand (vgl. linke oberen Abbildung der Fig. 9) des Systems 1. Es ist im Sinne dieser Ausgestaltung der Erfindung bevorzugt, dass der Kragarm 5 ein Gelenk 26, 27 aufweist, so dass ein oberer Bereich des Kragarms 5 nach der Drehung neben dem Körper des Nutzers 20 nach unten geklappt werden kann. Diese Drehbarkeit des Kragarms 5 ist in der linken unteren Abbildung von Fig. 9 durch den runden Pfeil angedeutet. In der rechten unteren Abbildung von Fig. 9 ist das System 1 im zusammengeklappten Zustand dargestellt, wenn der obere Bereich des Kragarms 5 neben dem Körper des Nutzers 20 zur Seite bzw. nach unten geklappt ist. Das Klappen nach unten erfolgt um eine horizontale Drehachse H1, H2, die vorzugsweise im Wesentlichen horizontal durch das Gelenk 26, 27 im Kragarm 5 des Systems 1 verläuft. Bei dem Gelenk 26, 27 kann es sich beispielsweise um ein Gelenk 26 im Übergangsbereich 24 zwischen Rückenabschnitt 15 und Kopfabschnitt 16 des Kragarms 5 handeln oder um ein Gelenk 27 im Rückenabschnitt 15 des Kragarms 5, das den Rückenabschnitt 15 in einen oberen Bereich 28 und einen unteren Bereich 29 unterteilt. In den unteren Abbildungen von Fig. 9 ist eine Ausführungsform des Systems mit einem Gelenk 27 im Rückenabschnitt 15 des Kragarms 5 dargestellt.

Fig. 10 zeigt eine bevorzugte Ausgestaltung des vorgeschlagenen Systems 1 mit einem Gelenk 30 im Kopfabschnitt 16 des Kragarms 5. Die zwei Abbildungen von Fig. 10 zeigen insbesondere eine Draufsicht auf eine bevorzugte Ausgestaltung des vorgeschlagenen Systems 1, wobei das Gelenk 30 den Kopfabschnitt 16 des Kragarms 5 in einen vorderen Bereich 31 und einen hinteren Bereich 32 unterteilt. Vorzugsweise wird das vordere Ende des vorderen Bereichs 31 des Kopfabschnitts 16 des Kragarms 5 als erstes oder vorderen Ende 7 des Kragarms 5 bezeichnet. Es ist im Sinne der Erfindung bevorzugt, dass der vordere Bereich 31 des Kopfabschnitts 16 des Kragarms 5 um eine zweite vertikale Achse V2 so zur Seite geklappt werden kann, dass der vordere Bereich 31 des Kopfabschnitts 16 des Kragarms 5 neben dem hinteren Bereich 32 des Kopfabschnitts 16 des Kragarms 5 zu liegen kommt. Mit anderen Worten liegen der vordere Bereich 31 und der hintere Bereich 32 des Kopfabschnitts 16 des Kragarms 5 - wie in der rechten Abbildung von Fig. 10 dargestellt - im Wesentlichen parallel zueinander vor. Durch diese Drehbarkeit um die zweite vertikale Achse V2 kann insbesondere die Ausdehnung des Systems 1 in einer Seitenansicht reduziert werden. Es ist im Sinne der Erfindung bevorzugt, dass die zweite vertikale Achse V2 im Wesentlichen parallel zu dem Rückenabschnitt 15 des Kragarms 5 bzw. einer Wirbelsäule des Nutzers 20 verläuft und aus der Zeichenebene der Fig. 10 herausragt. Mit anderen Worten: die zweite vertikale Achse V2 kommt dem Leser entgegen. Vorzugsweise verläuft die zweite vertikale Achse V2 durch das Gelenk 30 im Kopfabschnitt 16 des Kragarms 5.

Fig. 11 zeigt eine bevorzugte Ausgestaltung des vorgeschlagenen Systems 1 mit einem Stütz- bzw. Auflagepunkt 22 für eine Wand 23. Mit dieser Ausgestaltung der Erfindung kann das durch den Gegenstand 3 hervorgerufene Kippmoment 19 noch besser durch das System 1 aufgenommen werden. Der Stütz- bzw. Auflagepunkt 22 ist insbesondere im vorderen Ende 7 des Kragarms 5 angeordnet und kann ein elastisches Material oder mindestens eine Rolle umfassen, wobei das elastische Material oder die Rolle in Kontakt mit einer Wand 23 gelangen. Bei der Wand 23 kann es sich beispielsweise um ein Mauerwerk, eine Wand oder einen Untergrund handeln, das/die/der mit dem bevorzugt als Werkzeugmaschine ausgebildeten Gegenstand 3 bearbeitet werden soll. Mit dem Stütz- oder Auflagepunkt 22 kann sich das System 1 bzw. der Nutzer 20 des Systems 1 an der zu bearbeitenden Wand 23 abstützen, so dass das durch den Gegenstand 3 hervorgerufene Kippmoment 19 direkt in die Wand 23 eingeleitet wird und so keine Belastung für den Nutzes 20 des Systems 1 darstellt. Dadurch kann der Nutzer 20 des Systems 1 weiter erheblich entlastet und bei der Arbeit mit einem Werkzeuggerät unterstützt werden.

Fig. 11 zeigt darüber hinaus, dass der Kopfabschnitt 16 des Kragarms 5 teleskopierbar ausgebildet sein kann, wobei die Teleskopierbarkeit des Kopfabschnitts 16 des Kragarms 5 insbesondere in horizontaler Richtung vorliegt. Sie wird in Fig. 10 durch den oberhalb, parallel zu dem Kopfabschnitt 16 verlaufenden Pfeil angedeutet. Die Teleskopierbarkeit des Kopfabschnitts 16 macht es möglich, unterschiedliche Werkzeuge an dem bevorzugt als Werkzeugmaschine ausgebildeten Gegenstand 3 einzusetzen und damit zu arbeiten. Insbesondere kann das System 1 durch die Teleskopierbarkeit des Kopfabschnitts 16 des Kragarms 5 besonders einfach an unterschiedliche Werkzeuglängen des Werkzeuggeräts angepasst werden.

Fig. 12 zeigt eine bevorzugte Ausgestaltung des vorgeschlagenen Kits 50 als stand alone-Vorrichtung. Die Erfindung betrifft neben dem vorgeschlagenen System 1 in weiteren Aspekten ein elektronisches Modul 10 und ein Kit 50, wobei das Kit 50 ein elektronisches Modul 10, mindestens ein Zugseil 4 und eine Umlenkrolle 51 umfasst. Ein Gegenstand 3 kann an dem Zugseil 4 befestigt werden, wobei eine effektive Länge des Zugseils 4 - analog wie für das System 1 beschrieben - durch eine Aufwickelvorrichtung 12 des elektronischen Moduls 10 verkürzt oder verlängert werden kann, so dass ein Gewicht bzw. eine Gewichtskraft 2 des Gegenstands 3 ausgeglichen wird. Das elektronische Modul 10 umfasst jeweils eine solche Aufwickeleinheit 12, einen Motor 13, mit dem die Aufwickeleinheit 12 angetrieben werden kann, eine Energiequelle 11 zur elektrischen Versorgung des elektronischen Moduls 10 und seiner Komponenten 12, 13, 14, sowie eine Steuereinheit 14, die für den Ausgleichsvorgang zuständig ist. Mit dem Ausgleichsvorgang kann das Drehmoment, das mit dem Motor 13 erzeugt wird, geregelt, gesteuert und insbesondere an das Gewicht des Gegenstand 3 angepasst werden, so dass die Gewichtskraft 2 des Gegenstands 3 kompensiert wird. Das vorgeschlagenen Kits 50 kann als stand alone-Vorrichtung beispielsweise an einem gewünschten Arbeitsort aufgestellt werden und besonders einfach transportiert werden.

### Bezugszeichenliste

- 1: System
- 2: Gewichtskraft
- 3: Gegenstand
- 4: Zugseil
- 5: Kragarm
- 6: Rückenstruktur
- 7: erstes, vorderes Ende des Kragarms
- 8: zweites, hinteres Ende des Kragarms
- 9: Gegenkraft
- 10: elektronisches Modul
- 11: Energiequelle
- 12: Vorrichtung zum Aufwickeln des Zugseils
- 13: Motor
- 14: Steuereinrichtung
- 15: Rückenabschnitt des Kragarms
- 16: Kopfabschnitt des Kragarms
- 17: erster Kontaktbereich, Hüftgurt
- 18: zweiter Kontaktbereich, Rückenpolster
- 19: Kippmoment
- 20: Nutzer
- 21: Kopf des Nutzers
- 22: Stütz- bzw. Anlagepunkt
- 23: Wand
- 24: Übergangsbereich
- 25: Übergangsabschnitt
- 26: Gelenk im Übergangsbereich zwischen Rückenabschnitt und Kopfabschnitt des Kragarms
- 27: Gelenk im Rückenabschnitt des Kragarms
- 28: oberer Bereich des Rückenabschnitt des Kragarms
- 29: unterer Bereich des Rückenabschnitt des Kragarms
- 30: Gelenk im Kopfabschnitt des Kragarms
- 31: vorderer Bereich im Kopfabschnitt des Kragarms
- 32: hinterer Bereich im Kopfabschnitt des Kragarms
- 33: Stützstrebe
- 34: Getriebe
- 50: Kit
- 51: Umlenkrolle
- A: Abstand
- V: vorne
- H: hinten
- O: oben
- U: unten
- H1: erste horizontale Achse
- H2: zweite horizontale Achse
- V1: erste vertikale Achse
- V2: zweite vertikale Achse

## Patentansprüche

1. System (1) zum Ausgleich einer Gewichtskraft (2) eines Gegenstands (3), wobei der Gegenstand (3) an einem Zugseil (4) befestigbar ist, wobei das Zugseil (4) in oder an einem Kragarm (5) in Richtung einer Rückenstruktur (6) des Systems (1) führbar ist,
**dadurch gekennzeichnet, dass**
das System (1) ein elektronisches Modul (10) umfasst, das
- eine Energiequelle (11) zur Versorgung des Systems (1) mit elektrischer Energie,
- eine Vorrichtung (12) zum Aufwickeln des Zugseils (4),
- einen Motor (13) zum Antrieb der Vorrichtung (12) zum Aufwickeln des Zugseils (4) und
- eine Steuereinrichtung (14) umfasst,
wobei das System (1) dazu eingerichtet ist, eine Gegenkraft (9) für die Gewichtskraft (2) des Gegenstands (3) zu ermitteln und auf den Gegenstand (3) zu übertragen.

2. System (1) nach Anspruch 1
**dadurch gekennzeichnet, dass**
die Gegenkraft (9) für die Gewichtskraft (2) des Gegenstands (3) bei einem Ausgleichsvorgang ermittelt wird, so dass die Gewichtskraft (2) des Gegenstands (3) durch die der Gewichtskraft (2) entgegengerichtete Gegenkraft (9) ausgeglichen wird.

3. System (1) nach Anspruch 2
**dadurch gekennzeichnet, dass**
mit dem Ausgleichsvorgang ein Drehmoment des Motors (13) in Abhängigkeit von der Gewichtskraft (2) des Gegenstands (3) bestimmbar ist.

4. System (1) nach einem der vorhergehenden Ansprüche
**dadurch gekennzeichnet, dass**
die Vorrichtung (12) zum Aufwickeln des Zugseils (4) in einem Bereich der Rückenstruktur (6) angeordnet ist und das Zugseil (4) unter Verwendung des Motors (13) und der Vorrichtung (12) zum Aufwickeln des Zugseils (4) aufwickelbar ist.

5. System (1) nach einem der vorhergehenden Ansprüche
**dadurch gekennzeichnet, dass**
eine Führung des Zugseils (4) mittels Rollen und/oder eines Bowdenzugs realisiert wird.

6. System (1) nach einem der vorhergehenden Ansprüche
**dadurch gekennzeichnet, dass**
der Kragarm (5) von der Rückenstruktur (6) aufnehmbar ist,

7. System (1) nach einem der vorhergehenden Ansprüche
**dadurch gekennzeichnet, dass**
der Kragarm (5) einen Rückenabschnitt (15) und einen Kopfabschnitt (16) umfasst, wobei der Rückenabschnitt (15) und der Kopfabschnitt (16) im Wesentlichen senkrecht zueinander angeordnet sind.

8. System (1) nach einem der vorhergehenden Ansprüche
**dadurch gekennzeichnet, dass**
die Rückenstruktur (6) einen ersten Kontaktbereich (17) und einen zweiten Kontaktbereich (17) umfasst, wobei zumindest in den Kontaktbereichen (17, 18) ein Kontakt zwischen dem Nutzer (20) des Systems (1) und dem System (1) bestehen kann.

9. System (1) nach Anspruch 8
**dadurch gekennzeichnet, dass**
ein Abstand A zwischen dem ersten Kontaktbereich (17) und dem zweiten Kontaktbereich (18) einstellbar ist, um das System (1) an den Nutzer (20) anzupassen und ein durch den Gegenstand (3) hervorgerufenes Kippmoment (19) auszugleichen.

10. System (1) nach einem der vorhergehenden Ansprüche
**dadurch gekennzeichnet, dass**
das System (1) eine Stützstrebe (33) aufweist, um ein durch den Gegenstand (3) hervorgerufenes Kippmoment (19) in einen ersten Kontaktbereich (17) des Systems (1) einzuleiten.

11. System (1) nach einem der vorhergehenden Ansprüche
**dadurch gekennzeichnet, dass**
der Kragarm (5) über den Kopf (21) des Nutzers (20) oder neben dem Kopf (21) des Nutzers (20) führbar ist.

12. System (1) nach einem der vorhergehenden Ansprüche
**dadurch gekennzeichnet, dass**
der Kragarm (5) mindestens ein Gelenk (26, 27, 30) aufweist, so dass der Kragarm (5) klappbar ausgebildet ist.

13. System (1) nach einem der vorhergehenden Ansprüche
**dadurch gekennzeichnet, dass**
der Kragarm (5) einen Stützpunkt (22) umfasst, mit dem das System (1) an einer Wand (23) abstützbar ist.

14. Elektronisches Modul (10) zum Ausgleich einer Gewichtskraft (2) eines Gegenstands (3), wobei der Gegenstand (3) mit einem Zugseil (4) an dem elektronischen Modul (10) befestigbar ist,
**dadurch gekennzeichnet, dass**
das elektronische Modul (10)
- eine Energiequelle (11) zur Versorgung des Systems (1) mit elektrischer Energie,
- eine Vorrichtung (12) zum Aufwickeln des Zugseils (4),
- einen Motor (13) zum Antrieb der Vorrichtung (12) zum Aufwickeln des Zugseils (4) und
- eine Steuereinrichtung (14) umfasst,
wobei das System (1) dazu eingerichtet ist, eine Gegenkraft (9) für die Gewichtskraft (2) des Gegenstands (3) zu ermitteln und auf den Gegenstand (3) zu übertragen.

15. Kit (50) umfassend das elektronische Modul (10) nach Anspruch 14, ein Zugseil (4) und mindestens eine Umlenkrolle (51) zum Ausgleich einer Gewichtskraft (2) eines Gegenstands (3), der an dem Zugseil (4) befestigbar ist.
